# EUROPEAN PATENT APPLICATION

(11) **EP 0 910 006 A2**
(43) Date of publication of application: **21.04.1999**
(21) Application number: 98308462.5
(22) Date of filing: 15.10.1998
(51) Int. Cl.: G06F 1/26, G06K 11/18

(54) **Power supply control apparatus**

(30) Priority: 15.10.1997 JP 282066/97
(71) Applicant: Hudson Soft Co., Ltd., Sapporo-shi, Hokkaido (JP)
(72) Inventor: Okada, Setsuo, c/o Hudson Soft Co.,Ltd., Sapporo-shi, Hokkaido (JP); Oomichi, Hiroshi, c/o Hudson Soft Co.,Ltd., Sapporo-shi, Hokkaido (JP); Togashi, Shoichi, c/o Hudson Soft Co.,Ltd., Sapporo-shi, Hokkaido (JP)
(74) Representative: Brunner, Michael John

(57) **Abstract**

A power supply control apparatus which reduces power consumption in an information-input apparatus is provided. The control apparatus includes a power supply unit and a control unit. When the operator discontinues moving of a mouse, an X-encoder and a Y-encoder attached to the mouse stop outputting of pulse signals. The control unit allows a timer to start according to stopping of the pulse signals from the X-encoder and the Y-encoder. When a predetermined period of time elapses after the start of the timer, the timer outputs a timing signal to the control unit. According to the timing signal, the control unit controls the power supply unit so as to lower the power supplied from a battery in the power supply unit from normal level to a predetermined lower or zero level. If the operator moves the mouse or clicks the mouse button before the predetermined period elapses after the start of the timer, the controller causes the timer to stop so that the power supply from the battery is kept at the normal level.

## Description

The invention relates to a power supply control apparatus useful for a computer system, particularly to a power supply control apparatus useful for a computer system having a computer and an information input apparatus such as mouse, wireless mouse, etc. or an information input/output apparatus such as MODBM, printer, etc., capable of reducing the electric power conception.

A computer system is usually provided with a computer and an information input apparatus such as mouse, wireless mouse, etc. or an information input/output apparatus such as MODEM, printer, etc. A cursor is displayed on the CRT display to indicate the position of mouse, either wired or wireless, according to position signals from the mouse.

In a conventional computer system, a battery is used as the source of electric power for the wireless mouse and the cursor is displayed continuously on the CRT display. Thus, the electric power has to be supplied continuously from the power source to keep the position signals being provided from the mouse to the computer even if the mouse is not in use. Such continuous consumption of the electric power leads to frequent replacement at the battery, causing problems in maintenance and economy of the computer system.

Accordingly, an object of the invention is to provide a power supply control apparatus for a computer system, improved in power consumption.

According to the invention, a power supply control apparatus for a computer system provided with a computer and an information input apparatus for inputting information to the computer according to operation by an operator, the information inputted from the information input apparatus being processed in the computer according to a predetermined process, comprises:
a power source for supplying electric power to the information input apparatus;
a detecting means for detecting the start and finish of the operation to output start and finish signals, respectively; and
a control means for starting supplying of electric power to the information input apparatus in response to the start signal from the detecting means and stopping or depressing supplying of electric power to the information input apparatus in response to the finish signal from the detecting means.
Further, according to the invention, a power supply control apparatus for a computer system provided with a computer and an information output apparatus for outputting information which has been processed in the computer, comprises:
a power source for supplying electric power to the information output apparatus;
a detecting means for detecting the start and finish of outputting of the information by the information output apparatus so as to output start and finish signals, respectively: and
a control means for starting supplying of electric power to the information output apparatus in response to the start signal from the detecting means and stopping or depressing supplying of electric power to the information output apparatus in response to the finish signal from the detecting means.

The invention will be described in more detail in conjunction with the accompanying drawings, wherein:
FIG.1 is a block diagram at a conventional computer system;
FIG.2 is a block diagram of a computer system utilizing a power source control apparatus according to the first preferred embodiment of the invention;
FIG.3 is a timing chart showing the operation of computer system shown in Fig.2;
FIG.4 is a block diagram of a computer system utilizing a power source control apparatus according to the second preferred embodiment at the invention; and
FIG.5 is a block diagram at a computer system utilizing a power source control apparatus according to the third preferred embodiment of the invention.

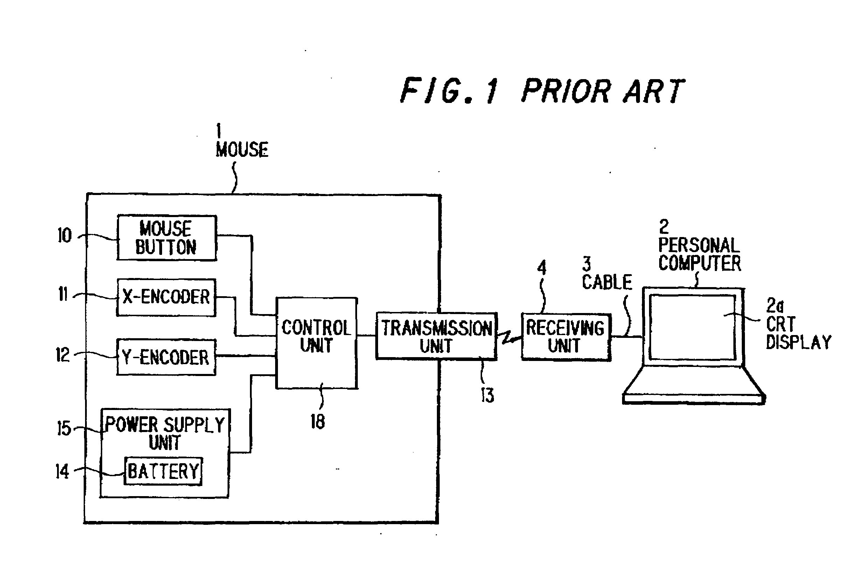

Before explaining a power supply control apparatus in the preferred embodiment according to the invention, the conventional power supply control apparatus mentioned above will be explained in FIG. 1.

FIG.1 shows a conventional computer system, in which wireless mouse 1 is connected with personal computer 2 by way of cable 3.

Wireless mouse 1 has a mouse ball (not shown) capable of rolling on a mouse pad (not shown), mouse button 10 for outputting an on-signal by clicking it, X-encoder 11 and Y-encoder 12 for generating pulse signals having numbers of pulses dependent, respectively, on X- and Y-axes moving distances obtained by decomposing a moving distance at the mouse ball, transmission unit 13 for transmitting a transmission signal of infrared rays in accordance with the on-signal supplied from mouse button 10 or the pulse signals supplied from X- and Y-encoders 11 and 12, power supply unit 15 provided with battery 14 for supplying electric power to various portions of mouse 1, and control unit 18 for the control of each portion in mouse 1. The transmission signal of infrared rays outputted from transmission unit 13 in mouse 1 is received by receiving unit 4 and converted to an on-signal for mouse button 10 or distance signals at the mouse ball in the directions of X-axis and Y-axis, so as to be outputted to personal computer 2 by way of cable 3.

The combination at mouse 1 and receiving unit 4 allows a command of an operator to be inputted to personal computer 2. For example, when mouse 1 is moved on a mouse pad, a cursor on CRT display 2a of personal computer 2 is caused to move and a predetermined icon can be selected by clicking of mouse button 10 when the cursor reaches the icon displayed on CRT display 2a so as to designate the icon.

In the conventional computer system, battery 14 is used as the source at electric power for the wireless mouse and the cursor is displayed continuously on CRT display 2a. Thus, the electric power has to be supplied from the power source to personal computer 2 continuously in order to keep the distance signals (position signals) being provided from mouse 1 even if mouse 1 is not in use. Such continuous consumption at the electric power leads to frequent replacement of battery 14, causing problems in maintenance and economy of the computer system.

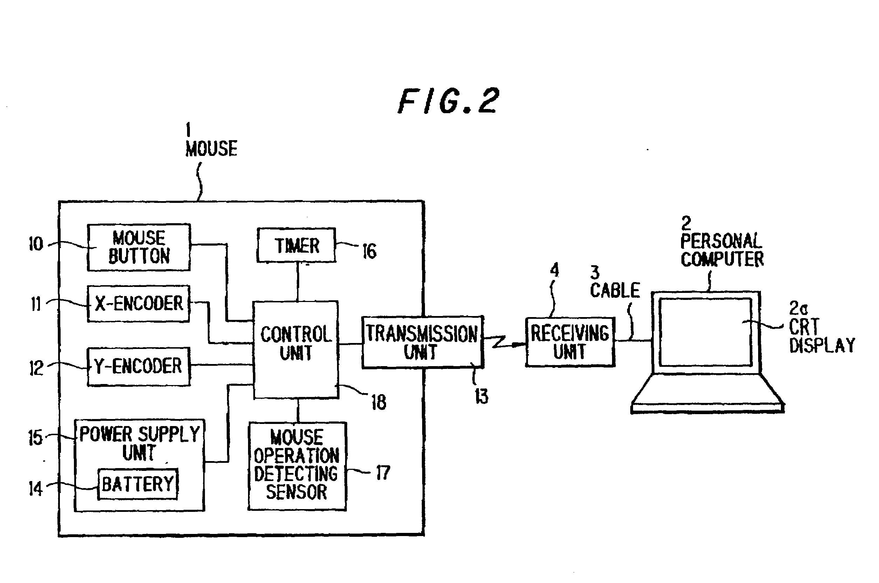

A preferred embodiment at power supply control apparatus according to the invention will be described in conjunction with FIG.2.

FIG.2 shows a computer system utilizing the first preferred embodiment of power control apparatus according to the invention. The computer system in FIG.2 is provided with wireless mouse 1 as an information-input apparatus and personal computer 2.

Wireless mouse 1 has a main body, not shown, in which a mouse ball (not shown) capable of roiling on a mouse pad (not shown), mouse button 10 for outputting an on-signal by clicking, X-encoder 11 and Y-encoder 12 for generating pulse signals having numbers of pulses dependent, respectively, on X- and Y-axes moving distances obtained by decomposing a moving distance of the mouse ball, transmission unit 13 for transmitting a transmission signal of infrared rays in accordance with the on-signal supplied from mouse button 10 or the pulse signals supplied from X- and Y-encoders 11 and 12, power supply unit 15 provided with battery 14, such as dry cell (primary battery) or storage battery (secondary battery), for supplying electric power to portions of mouse 1, timer 16, mouse operation detecting sensor 17 for detecting the start of operation of mouse 1 by an operator and outputting a detection signal in response to the detection, and control unit 18 for the control of portions of mouse 1. The main body of mouse 1 is provided with a cover being detachable for replacement of the battery.

Mouse operation detecting sensor 17 may be a vibration sensor, such as piezoelectric acceleration sensor, semiconductor acceleration sensor, etc., which detects vibrations generated upon the click of mouse button 10.

Receiving unit 4 is connected with personal computer 2 through cable 3. Receiving unit 4 serves to receive transmission signals transmitted from transmission unit 13 in mouse 1 and further to convert the received signal to an on-signal for mouse button 10 or pulse signals indicating the distances of the mouse ball decomposed in the directions of X-axis and Y-axis, respectively, so as to output the converted signals to personal computer 2 through cable 3. A demodulation circuit for demodulating the receiving signal to the on-signal or the pulse signal and other circuits are omitted from the description.

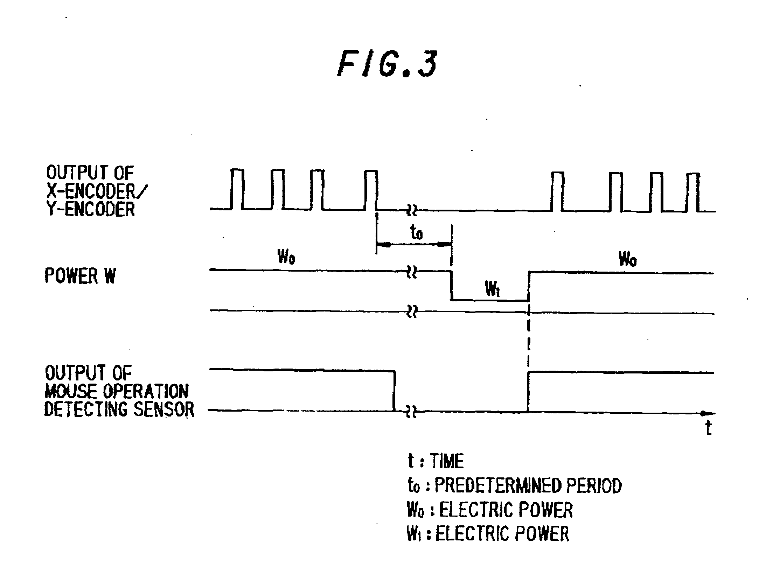

Fig.3 is a timing chart showing the operation of the computer system utilizing the first preferred embodiment of the invention. An operator operates personal computer 2 and conducts a predetermined display, for example, display of a cursor and an icon, on CRT display 2a. The operator moves mouse 1 on the mouse pad so as to move the cursor on CRT display 2a onto a predetermined icon. Meanwhile, mouse operation detecting sensor 17 detects the vibration due to the movement at mouse 1 when the operator moves mouse 1, so as to output a detection signal in response to the detected vibration to control unit 18. Control unit 18 controls power supply unit 15 so as to supply normal power W₀ to each portion of mouse 1 from battery 14, based on the detection signal from mouse operation detecting sensor 17. When the operator moves mouse 1 on the mouse pad, causing the mouse ball to roll on the surface of the mouse pad, X-encoder 11 and Y-encoder 12 transmit pulse signals having numbers of pulses dependent, respectively, on X- and Y-axes moving distances obtained by decomposing a moving distance of the mouse ball, through control unit 18 to transmission unit 13.

Transmission unit 13 outputs transmission signals in the form of infrared rays in response to the pulse signals. Receiving unit 4, upon receiving the transmission signals from transmission unit 13, converts the signals thus received to the pulse signals of pulse numbers according to the moving distances of the mouse ball in the directions of X-axis and Y-axis, respectively, and outputs the signals thus converted to personal computer 2 through cable 3.

When the cursor on CRT display 2a reaches the predetermined icon, the operator clicks mouse button 10 so as to designate the predetermined icon. Upon the click, mouse button 10 outputs an on-signal through control unit 18 to transmission unit 13, which further outputs the transmission signal in response to the on-signal in the form of infrared rays. Receiving unit 4 receives the transmission signal, converts it to an on-signal and further outputs the on-signal to personal computer 2 through cable 3. The predetermined processing is performed in personal computer 2 in response to the on-signal from receiving unit 4.

After the predetermined processing, when the operator discontinues the operation of moving mouse 1, X-encoder 11 and Y-encoder 12 discontinue the output at pulse signals. In response to the discontinuation of the output at the pulse signals from X-encoder 11 and Y-encoder 12, control unit 18 allows timer is to start. As shown in Fig.3, after predetermined period t₀ elapses after the start of timer 16, timer 16 outputs a timing signal to control unit 18. Power supply unit 15 is controlled by control unit 15 so as to lower the electric power, normally of W₀, supplied from battery 14, to W₁, as shown in Fig.3, in response to the timing signal from timer 16, and further so as to shut off the power supply from power supply unit 15 to other circuits than mouse operation detecting sensor 17. If the operator thereafter moves mouse 1 (or clicks mouse button 10) and the movement is detected by mouse operation detecting sensor 17, power supply unit 15 is controlled by control unit 18 so that the electric power supplied from battery 14 resumes normal power W₀. If the operator happens to move mouse 1 or click mouse button 10 before predetermined period t₀ elapses after the start at timer 16, control unit 18 causes timer 16 to stop so as to keep the electric power supplied from battery 14 at normal power, W₀.

According to the first preferred embodiment, power consumption at battery 14 can be reduced as the power supplied to each portion of mouse 1 is lowered while wireless mouse 1 is not in use.

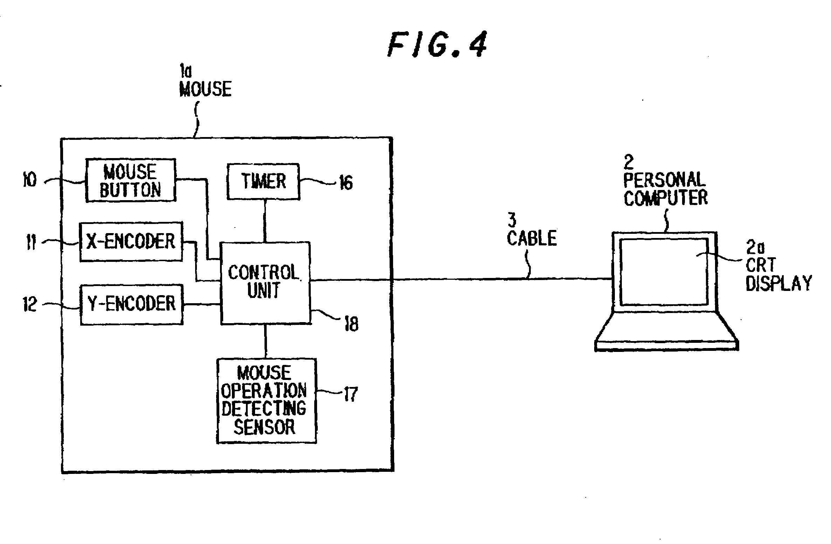

Fig.4 shows a computer system in the second preferred embodiment of power supply control apparatus according to the invention. In this computer system, wireless mouse 1 in the first preferred embodiment is replaced by mouse 1a to which the power is supplied from personal computer 2 through cable 3, otherwise, this system is composed similar to the first preferred embodiment. According to the second preferred embodiment, reduction in power consumption can be achieved, similar to that in the first preferred embodiment.

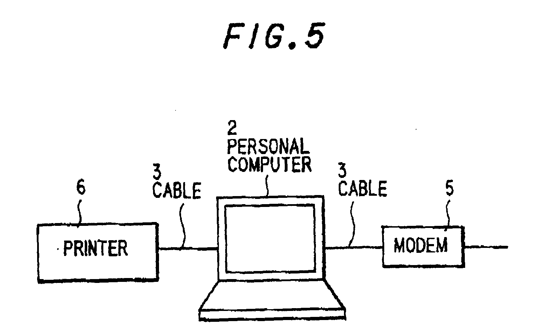

Fig.5 shows a computer system in the third preferred embodiment of power supply control apparatus according to the invention. In this computer system, personal computer 2 is connected with MODEM 5 as an information-input apparatus and printer 6 as an information output apparatus, through cable 3.

Personal computer 2 is so arranged that, for MODEM 5, it supplies power only to circuits in MODEM 5 required for receiving in receiving, and only to circuits in MODEM 5 required for transmission in transmission, and, for printer 6, it drives the printer in stand-by state in the low power mode in which power consumption is smaller than that in printing, while it drives the printer in the normal power mode when the print data is inputted from MODEM 5.

According to the third preferred embodiment mentioned above, reduction in power consumption can be achieved because power is supplied only to the circuits in the MODEM required for receiving or transmission, respectively, and the printer is driven in stand-by state in the low power mode consuming less power than that in printing.

A variety of embodiments are available to the present invention, without restriction to the embodiments described above.

For instance, though a case where a vibration sensor is used as mouse operation detecting sensor 17 is described in the first and second preferred embodiments above, mouse operation detecting sensor 17 may be a pressure sensor for detecting the pressure applied to the main body of the mouse due to the handling by an operator, such as semi-conductor pressure sensor, static capacity pressure sensor, strain gauge, etc., or may be a contact sensor for detecting the contact at a hand with the main body of the mouse.

Further, though the operation for mouse 1 is recognized to be finished when no pulse signal is received from X-encoder 11 and Y-encoder 12 for a predetermined period at time in the first and second preferred embodiments above, such recognition may be made when no detection signal is outputted from mouse operation detection sensor 17 for a predetermined period.

Furthermore, this invention can be applied to input devices including keyboard though the information input apparatus is exemplified by a mouse in the first and second preferred embodiments above. In addition, this invention can be applied to information input and output devices including displays, scanners such as OCR, external memory devices including CD-ROM drive and PD, sound sources for computer music such as MIDI sound source, though the information input apparatus is exemplified by a MODEM and the information output apparatus is exemplified by a printer in the third preferred embodiment above.

As described above, reduction in power consumption can be obtained by a power supply control apparatus according to the invention, because the power supply is started on detection of the start of operation or the start at output at information and it is discontinued on detection of the finish of operation or the finish of output at information.

Although the invention has been described with respect to the specific embodiments for complete and clear disclosure, the appended claims are not to be thus limited but are to be construed as embodying all modification and alternative constructions that may occur to one skilled in the art which fairly fall within the basic teaching herein set forth.

## Claims

1. A power supply control apparatus for a computer system provided with a computer and an information input apparatus for inputting information to said computer according to operation by an operator, said information inputted from said information input apparatus being processed in said computer according to a predetermined process, said power supply control apparatus comprising:
a power source for supplying electric power to said information input apparatus;
a detecting means for detecting the start and finish of said operation to output start and finish signals, respectively; and
a control means for starting supplying at electric power to said information input apparatus in response to said start signal from said detecting means and stopping or depressing supplying at electric power to said information input apparatus in response to said finish signal from said detecting means.

2. A power supply control apparatus for a computer system as defined in claim 1, wherein said power source is a battery.

3. A power supply control apparatus for a computer system as defined in claim 1, wherein said power source is a commercial power supply.

4. A power supply control apparatus for a computer system as defined in claim 1, wherein said information input apparatus is a mouse provided with a mouse button for clicking to transmit an on-signal with respect to said operation and capable of transmitting, to said computer, distance signals in accordance with the moving distances decomposed in the directions of X-axis and Y-axis on a mouse pad.

5. A power supply control apparatus for a computer system as defined in claim 4, wherein said mouse is a wireless mouse from which said on-signal and said distance signals are transmitted by wireless and said power source is a battery built in the main body at said wireless mouse.

6. A power supply control apparatus for a computer system as defined in claim 4, wherein said information input apparatus is a wired mouse from which said on-signal and said distance signals are transmitted by wire.

7. A power supply control apparatus for a computer system as defined in claim 4, wherein said detecting means comprises a sensor for detecting the operation of said mouse based on the vibration or pressure applied to said mouse, said sensor being provided in said mouse, and an X-encoder and a Y-encoder from which said distance signals are transmitted to said computer; said mouse button, said X-encoder and said Y-encoder allowing said control means to output said finish signal unless said on-signal from said mouse button or distance signals from said X-encoder and said Y-encoder are outputted within a predetermined period of time.

8. A power supply control apparatus for a computer system as defined in claim 1, wherein said detecting means is a portion of said information input apparatus and said control means stops or depressed said supplying of electric power to portions of said information input apparatus excluding said detecting means in response to said finish signal.

9. A power supply control apparatus for a computer system as defined in claim 7, wherein said control means stops or depresses said supplying of electric power to portions excluding said sensor in response to said finish signal.

10. A power supply control apparatus for a computer system as defined in claim 1, wherein said information-input apparatus is a keyboard.

11. A power supply control apparatus for a computer system provided with a computer, an information input apparatus for inputting information to be processed in said computer according to a predetermined process and an information output apparatus for outputting information which has been processed in said computer, said power supply control apparatus comprising:
a power source for supplying electric power to said information input apparatus and said information output apparatus;
a first detecting means for detecting the start and finish of inputting at said information by said information input apparatus so as to output start and finish signals, respectively;
a second detecting means for detecting the start and finish of outputting of said information by said information output apparatus so as to output start and finish signals, respectively; and
a control means for starting supplying at electric power to said information input apparatus in response to said start signal from said first detecting means, starting supplying of electric power to said information output apparatus in response to said start signal from said second detecting means, stopping or depressing supplying at electric power to said information input apparatus in response to said finish signal from said first detecting means, and stopping or depressing supplying at electric power to said information output apparatus in response to said finish signal from said second detecting means.

12. A power supply control apparatus for a computer system provided with a computer and an information output apparatus for outputting information which has been processed in said computer, said power supply control apparatus comprising:
a power source for supplying electric power to said information output apparatus;
a detecting means for detecting the start and finish of outputting at said information by said information output apparatus so as to output start and finish signals, respectively; and
a control means for starting supplying at electric power to said information output apparatus in response to said start signal from said detecting means and stopping or depressing supplying of electric power to said information output apparatus in response to said finish signal from said second detecting means.
